# EUROPEAN PATENT SPECIFICATION

(11) **EP 0 383 299 B1**
(45) Date of publication and mention of the grant of the patent: **19.04.1995**
(21) Application number: 90102892.8
(22) Date of filing: 14.02.1990
(51) Int. Cl.: G11B 7/00, G11B 19/20

(54) **Optical disk recording/reproducing apparatus and its disk rotary driving apparatus**
Aufnahme/Wiedergabegerät für optische Scheibe und Scheibenrotationsantrieb dafür
Appareil d'enregistrement/reproduction pour disque optique et dispositif d'entraînement rotatif pour ceci

(30) Priority: 15.02.1989 JP 35665/89
(43) Date of publication of application: 22.08.1990
(73) Proprietor: SONY CORPORATION, Tokyo (JP)
(72) Inventor: Ito, Hiroyuki, c/o Sony Corporation, Tokyo (JP); Hattori, Hidekazu, c/o Sony Corporation, Tokyo (JP); Kitani, Satoshi, c/o Sony Corporation, Tokyo (JP)
(74) Representative: TER MEER STEINMEISTER & PARTNER GbR

(56) References cited:
- DE-A- 2 731 666
- FR-A- 2 467 461
- US-A- 4 653 040
- PATENT ABSTRACTS OF JAPAN vol. 11, no. 161 (E-509)(2608) 23 May 1987,& JP-A-61 293183 (PIONEER ELECTRONIC CORPORATION) 23 December 1986,

## Description

The present invention relates to a disk rotary driving apparatus according to the preambles of claims 1 or 2, in, e.g., an optical disk reproducing apparatus and, more particularly, to a disk rotary driving apparatus in an optical disk reproducing apparatus for a compact disk player or the like, capable of reproducing a plurality of types of disks having different sizes.

In a conventional disk rotary driving apparatus of a reproduction-only optical disk reproducing apparatus such as a CD-ROM disk player or a compact disk player, rotation of a spindle motor is phase-controlled on the basis of a phase comparison signal between a clock signal separated from a reproduction signal obtained by an optical pickup and a predetermined reference signal.

In this manner, in a compact disk player, a spindle motor and its driver constitute a PLL (phase locked loop) circuit as a whole, thereby rotationally driving a compact disk with high precision.

An optical disk such as a compact disk has various diameter sizes, e.g., a compact disk has two diameters 8 cm and 12 cm.

Therefore, in a spindle motor of a compact disk player, the weight of an object to be rotationally driven as a load on the spindle motor changes in accordance with whether a compact disk having a diameter of 8 cm or 12 cm is to be driven.

Therefore, in a compact disk player capable of reproducing two types of compact disks having diameters of 8 cm and 12 cm, a servo gain of a PLL circuit must be automatically switched in accordance with the type of a loaded compact disk. Therefore, various detecting methods are used to detect the disk size of the loaded compact disk.

In a first detecting method, a photoreflector is arranged at a predetermined position of an optical disk reproducing apparatus. The diameter of a loaded optical disk is discriminated in accordance with the presence/absence of light reflected by the optical disk. In this manner, the disk size is detected.

In a second method, a photointerruptor, instead of a photoreflector, is arranged at a predetermined position in an optical disk reproducing apparatus. As in the first method, the size of a loaded optical disk is detected in accordance with whether light from the photointerruptor is interrupted by the optical disk.

In a third detecting method, mechanical contacts are arranged at a predetermined position in an optical disk reproducing apparatus. As in the first and second methods, the type of an optical disk is detected in accordance with ON/OFF of the contacts.

In a fourth detecting method, a reproduction light beam is radiated from an optical pickup of an optical disk reproducing apparatus onto a loaded optical disk. The optical pickup detects the presence/absence of a reflected light beam, thereby detecting the type of the loaded optical disk as in the above methods.

Therefore, one of the first to fourth detecting methods is selected upon designing of an optical disk player. The servo gain of a PLL circuit of a spindle motor is switched on the basis of a detection result obtained by the selected method.

In the first to third detecting methods, however, an exclusive detecting mechanism must be provided to detect the disk size of a loaded optical disk. Therefore, an arrangement of an optical disk reproducing apparatus such as a compact disk player is complicated.

In addition, in order to reproduce an 8-cm size compact disk in a compact disk player capable of reproducing only a 12-cm size compact disk, an 8-cm size compact disk with an adaptor, consisting of a synthetic resin or the like, mounted on its outer circumference surface is sometimes rotationally driven.

In this case, since an 8-cm size compact disk with an adaptor mounted on its outer circumference is rotationally driven, a spindle motor of a compact disk player must be phase-controlled with a servo gain similar to that used to rotationally drive a 12-cm compact disk.

Since, however, the adaptor is not formed to reflect light, a loaded compact disk is detected as an 8-cm compact disk in the above first and fourth detecting methods. Therefore, a spindle motor is phase-controlled with a servo gain for driving an 8-cm compact disk, resulting in an insufficient servo gain.

In addition, some compact disks have a transparent outer circumference. In this case, in the first, second, and fourth detecting methods, an 8-cm compact disk may be erroneously detected although a 12-cm compact disk is loaded.

In order to avoid an erroneous detection of CD's of different size placed on a turntable for rotational driving by a spindle motor, a servo loop for controlling the rotation of said spindle motor and a control circuit are known (JP-A-61 293 183 and US-A-4 653 040) for detecting, on the basis of different inertias of the CD's of different size, an activation response state of said spindle motor upon starting based on a voltage proportional to the rotation of the spindle motor when a predetermined period of time has ellapsed after said spindle motor has been energized by an activating signal and for switching the gain of the servo loop as a response of the detection result.

It is an object of the invention to offer a more simple and more reliable servo loop and control circuit for a disk driving motor which moreover can be realized as an integrated circuit.

In order to solve the above problems realized with the state of the art, according to the present invention, a disk rotary driving apparatus is provided with the features according to claims 1 or 2 in two alternative technical solutions.

The invention and advantageous effects thereof are described in the following with reference to the accompanying drawings in which:
Fig. 1 is a block diagram showing a compact disk player according to an embodiment of the present invention;
Figs. 2A to 2B2 are timing charts showing signal waveforms for explaining an operation of the embodiment shown in Fig. 1;
Fig. 3 is a block diagram showing a controller according to the second embodiment; and
Figs. 4A to 4B2 are timing charts showing signal waveforms for explaining an operation of the second embodiment shown in Fig. 3.

### DETAILED DESCRIPTION OF THE PREFERRED EMBODIMENTS

An embodiment in which a disk rotary driving apparatus of the present invention is applied to a compact disk player as an optical disk reproducing apparatus will be described below with reference to the accompanying drawings.

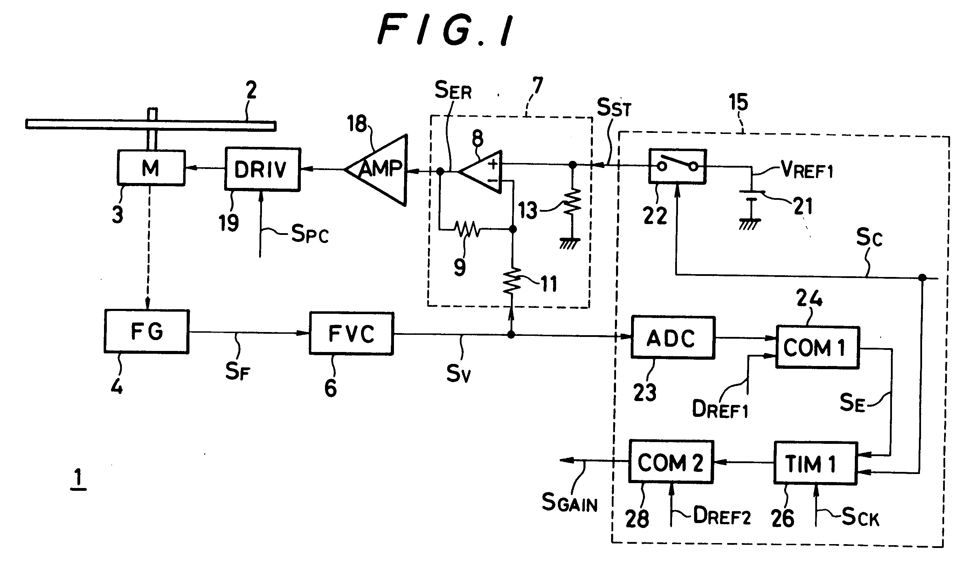

Referring to Fig. 1, reference numeral 1 denotes an overall arrangement of a compact disk player. In the compact disk player 1, a compact disk 2 is rotationally driven by a spindle motor (M) 3. Although not shown, information recorded in the compact disk 2 is read by an optical pickup unit provided in a main body of the disk player 1 so as to move along the radial direction of the disk. Reference numeral 4 denotes a frequency generator (FG) for outputting a rotational speed detection signal S_{F} having a frequency increasing in proportion to the rotational speed of the spindle motor 3. Reference numeral 6 denotes a frequency/voltage converter (FVC) for converting the rotational speed detection signal S_{F} from the frequency generator 4 into a voltage and outputting an output signal S_{V} having a voltage changing in proportion to the rotational speed of the compact disk 2. Reference numeral 8 denotes an operational amplifier; 9, a feedback resistor; and 11 and 13, input resistors. The operational amplifier 8, the feedback resistor 9, and the input resistors 11 and 13 constitute a differential amplifier 7. The operational amplifier 8 receives at its inverting input terminal the output signal S_{V} from the frequency/voltage converter 6 and receives at its non-inverting input terminal an activation signal S_{ST} from a controller 15 (to be described later). The operational amplifier 8 outputs an error signal S_{ER} of the output signal S_{V} from the frequency/voltage converter 6 with respect to the activation signal S_{ST}. The error signal S_{ER} is supplied to an amplifier (AMP) 18. Reference numeral 19 denotes a driver (DRIV) for driving the spindle motor 3 on the basis of the error signal S_{ER} amplified by the amplifier 18. With this arrangement, the spindle motor 3, the frequency generator 4, the frequency/voltage converter 6, the operational amplifier 8, the amplifier 18 and the driver 19 constitute a servo loop.

The spindle motor 3, therefore, is activated such that the output signal S_{V} follows the activation signals S_{ST}.

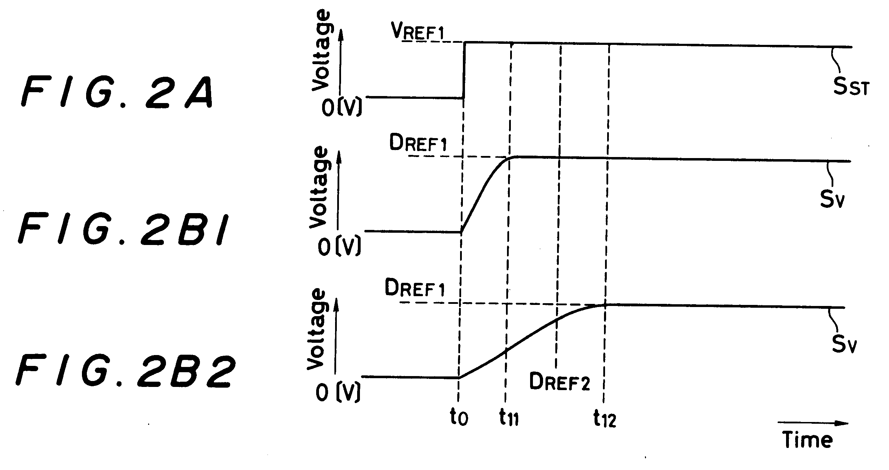

As shown in Fig. 1 and with reference to Figs. 2A to 2B2, the controller 15 comprises: a switch circuit 22 to be switched on the basis of a control signal S_{C} when a reproduction operation member is operated; an analog/digital converter (ADC) 23 for converting the output signal S_{V} from the frequency/voltage converter 6 into a digital signal; a first comparator (COM1) 24 for comparing the output signal S_{V} converted into a digital signal by the A/D converter 23 with predetermined reference data D_{REF1} and raising the signal level of an output signal S_{E} when the output signal S_{V} rises higher than a voltage determined by the reference data D_{REF1}; a timer circuit (TIM1) 26 to be reset at the same time as the switch circuit 22 is switched on at a timing t₀ by the control signal S_{C} as in the switch circuit 22 and counting a predetermined clock signal during a feedback period from the reset timing t₀ to a timing t₁₁ or t₁₂ at which the signal level of the output signal S_{E} rises; and a second comparator (COM2) 28 for fetching the count of the timer circuit 26 when the signal level of the output signal S_{E} rises and comparing the count with predetermined reference data D_{REF2}.

When an 8-cm compact disk body alone is to be driven, a small count is obtained from the timer circuit 26. When a 12-cm compact disk or an 8-cm compact disk with an adaptor is to be driven, a large count is obtained from the timer circuit 26. When a 12-cm compact disk or an 8-cm compact disk with an adaptor is to be driven, the comparator 28 raises a switch signal S_{GAIN} of a servo gain.

In this embodiment having the above arrangement, the spindle motor 3 is activated to follow the rise in the activation signal S_{ST}. The rotational speed of an output shaft of the spindle motor 3 is gradually increased.

As described above, the activation response state of the spindle motor 3 changes in accordance with the weight of the compact disk 2 to be rotationally driven by the spindle motor 3. That is, when a 12-cm compact disk or an 8-cm compact disk fixed to an adaptor is to be driven, an object to be rotationally driven is heavier than that when an 8-cm compact disk body alone is to be driven. For this reason, increase of the rotational speed of the output shaft of the spindle motor 3 is delayed.

When an 8-cm compact disk body alone is to be driven, therefore, the output signal S_{V} rises to a predetermined voltage within a short time period as shown in Fig. 2B1. When a 12-cm compact disk or an 8-cm compact disk fixed to an adaptor is to be driven, however, the rise in the output singal S_{V} is delayed as shown in Fig. 2B2.

In this embodiment, therefore, a time period required for the output signal S_{V} to rise to a predetermined voltage is detected to detect the activation response state of the spindle motor 3, thereby switching the servo gain on the basis of the detection result.

That is, the controller 15 converts the output signal S_{V} into a digital signal in the A/D converter 23 and supplies the converted output signal S_{V} to the first comparator 24, compares the output signal S_{V} with the reference data D_{REF1} in the first comparator 24, and outputs the output signal S_{E} indicating that the output signal S_{V} exceeds the voltage determined by the reference data D_{REF1}. At the same time, the controller 15 counts a predetermined clock signal S_{CK} for a time period from a timing t₁₁ to a timing t₁₂ at which the output signal S_{E} rises in the timer circuit 26, and compares the count with the predetermined reference data D_{REF2} in the second comparator 28. For this reason, when a 12-cm compact disk or an 8-cm compact disk with an adaptor is to be rotationally driven, the servo gain switch signal S_{GAIN} is output,

In this embodiment, a phase comparison signal between a clock signal separated from a reproduction signal and a predetermined reference signal is output together with an output signal from the amplifier 18 to the driver 19. When the servo gain switch signal S_{GAIN} rises, the signal level of the phase comparison signal to be output to the driver 19 is raised, thereby increasing the servo gain of the PLL circuit.

When the spindle motor 3 is to drive a heavy object, therefore, the spindle motor 3 is phase-controlled by a larger servo gain, thereby reliably reproducing an audio signal.

A conventional compact disk player of this type includes the frequency generator 4, the frequency/voltage converter 6 and the like in order to activate the spindle motor 3. According to this embodiment, however, an object to be rotationally driven by the spindle motor 3 can be reliably detected by only adding the timer circuit 26 and the like on a circuit board.

Unlike in a conventional apparatus, therefore, the type of an object to be driven can be detected without proving an exclusive detecting mechanism such as a photoreflector or a photointerruptor. As a result, an arrangement of the compact disk player 1 as a whole can be simplified.

In addition, the type of an object to be rotationally driven is detected on the basis of the activation response state of the spindle motor 3 which changes in accordance with the object to be rotationally driven. Therefore, erroneous detection caused by a conventional apparatus can be prevented, thereby reliably switching the servo gain.

In this embodiment, as described above, the frequency generator 4, the frequency/voltage converter 6 and the controller 15 constitute a detector for detecting the activation response state of the spindle motor 3. The frequency generator 4, the frequency/voltage converter 6, the operational amplifier 8, the resistors 9, 11 and 13, the controller 15, the amplifier 18 and the driver 19 constitute an activating circuit for activating the spindle motor 3.

With this arrangement, a time period required for the output signal S_{V} to rise to a predetermined voltage (i.e., a voltage determined by the reference data D_{REF1}) is detected to detect the activation response state of the spindle motor 3. Therefore, the type of an object to be rotationally driven by the spindle motor 3 can be reliably detected with a simple arrangement. In addition, the servo gain of the PLL circuit can be switched to reliably reproduce an audio signal.

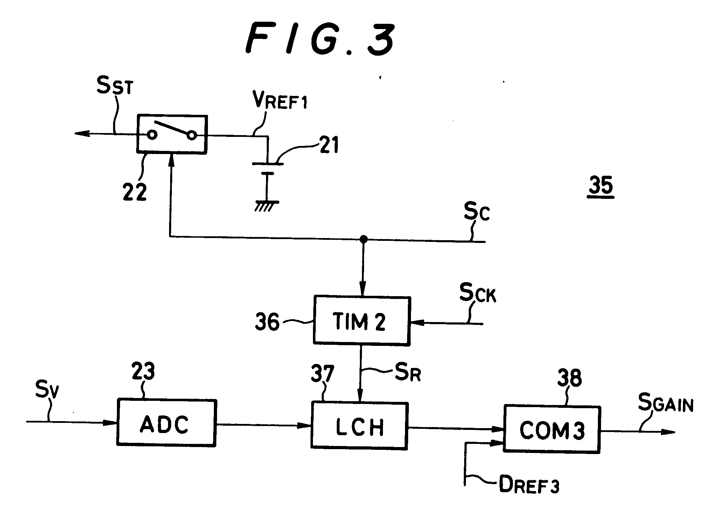

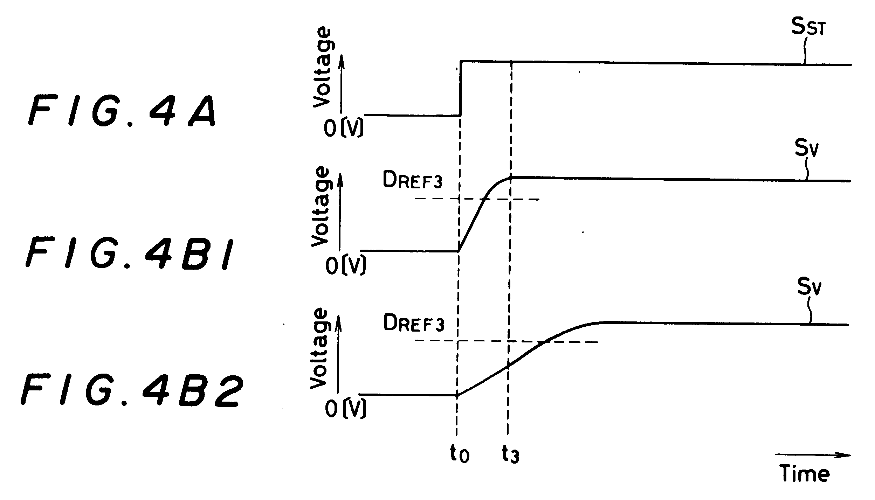

Figs. 3 and 4A to 4B2 show the second embodiment of the present invention. In the second embodiment, a spindle motor 3 is activated at a timing t₀, and an output voltage S_{V} is detected at a timing t₃ after a predetermined period of time elapses, thereby detecting an activation response state of the spindle motor 3.

That is, in a controller 35, a timer circuit (TIM2) 36 is reset at the timing t₀ (Fig. 4A) on the basis of a control signal S_{C} and then counts a predetermined clock signal S_{CK}.

When the count reaches a predetermined value, the timer circuit 36 outputs a latch signal S_{R} to a latch circuit (LCH) 37, thereby fetching a digital value of the output signal S_{V} (Figs. 4B1 and 4B2) into the latch circuit 37 at the timing t₃.

When a 12-cm compact disk or an 8-cm compact disk fixed to an adaptor is to be driven, therefore, data having a small value is latched by the latch circuit 37. To the contrary, when an 8-cm compact disk body alone is to be driven, data having a large value is latched by the latch circuit 37.

A comparator (COM3) 38 discriminates the magnitude of the data stored in the latch circuit 37 on the basis of predetermined reference data D_{REF3} and outputs the discrimination result as a servo gain switch signal S_{GAIN}.

According to the arrangement shown in Fig. 3, the output voltage S_{V} is detected when a predetermined period of time elapses after the spindle motor 3 is activated, thereby detecting the activation response state of the spindle motor 3. The same effect as in the first embodiment can be obtained in this arrangement.

Note that the arrangement except for the control circuit 35 is the same as the first embodiment and a detailed description thereof will be omitted.

In the above embodiments, the output voltage S_{V} from the frequency/voltage converter 6 is fetched to the controller 15 to detect the activation response state of the spindle motor 3. The present invention, however, is not limited to the above embodiments. For example, the output signal from the frequency generator 4 may be fetched directly to the controller to detect the activation response state.

In addition, in the above embodiments, the controller is constituted by a timer circuit and the like. The present invention, however, is not limited to the above embodiments. For example, the controller may be constituted by a microcomputer.

Furthermore, in the above embodiments, the type of an object to be rotationally driven is detected, and the servo gain of the PLL circuit is switched on the basis of the detection result. The present invention, however, is not limited to an arrangement in which the servo gain is switched but can be widely applied to an arrangement in which the type of an object to be rotationally driven is displayed and the like.

Moreover, in the above embodiments, the present invention is applied to a compact disk player. The present invention, however, is not limited to a compact disk player but can be widely applied as a disk rotary driving apparatus for an optical disk reproducing apparatus for reproducing a compact disk and a video disk and an optical disk recording apparatus for optically recording an information signal in an optical disk.

As has been described above, according to the present invention, an object to be rotationally driven by a spindle motor is detected on the basis of an activation response state of the spindle motor.

Therefore, a disk rotary driving apparatus capable of reliably detecting the type of an object to be rotationally driven can be obtained with a simple arrangement.

## Claims

1. A disk rotary driving apparatus (1) comprising:
- a spindle motor (3) for rotationally driving a disk (2);
- a servo loop (4, 6, 7, 18, 19) for controlling the rotation of said spindle motor (3); and
- a control circuit (15) for detecting an activation response state of said spindle motor (3) upon starting on the basis of a voltage proportional to the rotation of said spindle motor (3) when a predetermined period of time has elapsed after said spindle motor (3) is activated by an activating signal (S_{c}) and switching the gain of said servo loop on the basis of the detection result,
**characterized by**
- an analog/digital converter (23) within said control circuit (15) for analog/digital-converting an information signal (Sᵥ) proportional to the rotation of said spindle motor (3);
- a first comparator (24) for comparing an output signal from said analog/digital converter (23) with first reference data (D_{REF1});
- a timer circuit (26) started by the activating signal (S_{c}) for said spindle motor (3) for counting a clock signal (S_{CK}) until an output signal (S_{E}) from said first comparator (24) rises; and
- a second comparator (28) comparing an output signal from said timer circuit (26) with second reference data (D_{REF2}) and outputting a control signal (S_{GAIN}) for switching the gain of said servo loop on the basis of a comparison output signal from said second comparator (28).

2. A disk rotary driving apparatus (1) comprising:
- a spindle motor (3) for rotationally driving a disk (2);
- a servo loop (4, 6, 7, 18, 19) for controlling the rotation of said spindle motor (3); and
- a control circuit (35) for detecting an activation response state of said spindle motor (3) upon starting on the basis of a voltage proportional to the rotation of said spindle motor (3) when a predetermined period of time has elapsed after said spindle motor (3) is activated by an activating signal (S_{c}) and switching the gain of said servo loop on the basis of the detection result,
**characterized by**
- an analog/digital converter (23) within said control circuit (35) for analog/digital converting an information signal (S_{V}) proportional to the rotation of said spindle motor (3);
- a latch circuit (37) for latching an output from said analog/digital converter (23);
- a timer circuit (36) for counting a clock signal (S_{CK}) on the basis of said spindle motor (3) activation signal and outputting a latch signal (S_{R}) when the count reaches a predetermined value; and
- a comparator (38) for comparing an output signal from said latch circuit (37) with reference data (D_{REF3}) and outputting a control signal (S_{GAIN}) for switching the gain of said servo loop on the basis of the comparison output from said comparator (38).

## Patentansprüche

1. Plattendrehantrieb (1) mit:
- einem Plattenantriebsmotor (3) zum drehenden Antreiben einer Platte (2);
- einem Regelungskreis (4, 6, 7, 18, 19) zum Regeln der Drehung des Plattenantriebsmotors (3) und
- einer Steuerschaltung (15) zum Erfassen eines Aktivierungsansprechzustands des Plattenantriebsmotors (3) beim Start auf Grundlage einer Spannung, die proportional zur Drehung des Plattenantriebsmotors (3) ist, wenn eine vorgegebene Zeitspanne nach der Aktivierung des Plattenantriebsmotors (3) durch ein Aktivierungssignal (S_{C}) verstrichen ist, und zum Umschalten der Verstärkung des Regelungskreises auf Grundlage des Erkennungsergebnisses;
**gekennzeichnet durch**
- einen Analog/Digital-Umsetzer (23) innerhalb der Steuerschaltung (15) für Analog/Digital-Umsetzung eines Informationssignals (S_{V}), das proportional zur Drehung des Plattenantriebsmotors (3) ist;
- einen ersten Komparator (24) zum Vergleichen des Ausgangssignals vom Analog/Digital-Umsetzer (23) mit einem ersten Bezugsdatenwert (D_{REF1});
- eine Timerschaltung (26), die vom Aktivierungssignal (S_{C}) für den Plattenantriebsmotor (3) gestartet wird, um ein Taktsignal (S_{CK}) zu zählen, bis das Ausgangssignal (S_{E}) des ersten Komparators (24) ansteigt; und
- einen zweiten Komparator (28), der das Ausgangssignal der Timerschaltung (26) mit einem zweiten Bezugsdatenwert (D_{REF2}) vergleicht und ein Steuersignal (S_{GAIN}) zum Umschalten der Verstärkung des Regelungskreises auf Grundlage des Vergleichsausgangssignals des zweiten Komparators (28) ausgibt.

2. Plattendrehantrieb (1) mit:
- einem Plattenantriebsmotor (3) zum drehenden Antreiben einer Platte (2);
- einem Regelungskreis (4, 6, 7, 18, 19) zum Regeln der Drehung des Plattenantriebsmotors (3) und
- einer Steuerschaltung (35) zum Erfassen eines Aktivierungsansprechzustands des Plattenantriebsmotors (3) beim Start auf Grundlage einer Spannung, die proportional zur Drehung des Plattenantriebsmotors (3) ist, wenn eine vorgegebene Zeitspanne nach der Aktivierung des Plattenantriebsmotors (3) durch ein Aktivierungssignal (S_{C}) verstrichen ist, und zum Umschalten der Verstärkung des Regelungskreises auf Grundlage des Erkennungsergebnisses;
**gekennzeichnet durch**
- einen Analog/Digital-Umsetzer (23) innerhalb der Steuerschaltung (35) für Analog/Digital-Umsetzung eines Informationssignals (S_{V}), das proportional zur Drehung des Plattenantriebsmotors (3) ist;
- eine Latchschaltung (37) zum Einspeichern des Ausgangssignals des Analog/Digital-Umsetzers (23) mit einem ersten Bezugsdatenwert (D_{REF1});
- eine Timerschaltung (36) zum Zählen eines Taktsignals (S_{CK}) auf Grundlage des Aktivieriungssignals für den Plattenantriebsmotor (3), und zum Ausgeben eines Einspeichersignals (S_{R}) wenn der Zählwert einen vorgegebenen Wert erreicht; und
- einen Komparator (38) zum Vergleichen des Ausgangssignals der Latchschaltung (37) mit einem Bezugsdatenwert (D_{REF3}) und zum Ausgeben eines Steuersignals (S_{GAIN}) zum Umschalten der Verstärkung des Regelungskreises auf Grundlage des Vergleichsausgangssignals des Komparators (38).

## Revendications

1. Appareil d'entraînement rotatif de disque (1) comprenant :
- un moteur d'axe (3) pour entraîner de façon rotative un disque (2) ;
- une boucle d'asservissement (4, 6, 7, 18, 19) pour commander la rotation dudit moteur d'axe (3) ; et
- un circuit de commande (15) pour détecter un état de réponse d'activation dudit moteur d'axe (3) lors du démarrage sur la base d'une tension proportionnelle à la rotation dudit moteur d'axe (3) lorsqu'une période de temps prédéterminée s'est écoulée après que ledit moteur d'axe (3) ait été activé par un signal d'activation (S_{C}) et pour commuter le gain de ladite boucle d'asservissement sur la base du résultat de détection,
caractérisé par
- un convertisseur analogique/numérique (23) dans ledit circuit de commande (15) pour convertir d'analogique en numérique un signal d'information (S_{V}) proportionnel à la rotation dudit moteur d'axe (3) ;
- un premier comparateur (24) pour comparer un signal de sortie dudit convertisseur analogique/ numérique (23) avec des premières données de référence (D_{REF1}) ;
- un circuit de temporisation (26) démarré par le signal d'activation (S_{C}) pour ledit moteur d'axe (3) pour compter un signal d'horloge (S_{CK}) jusqu'à ce qu'un signal de sortie (S_{E}) dudit premier comparateur (24) s'élève ; et
- un second comparateur (28) pour comparer un signal de sortie dudit circuit de temporisation (26) avec les secondes données de référence (D_{REF2}) et pour fournir un signal de commande (S_{GAIN}) pour commuter le gain de ladite boucle d'asservissement sur la base d'un signal de sortie de comparaison dudit second comparateur (28).

2. Appareil d'entraînement rotatif de disque (1) comprenant :
- un moteur d'axe (3) pour entraîner de façon rotative un disque (2) ;
- une boucle d'asservissement (4, 6, 7, 18, 19) pour commander la rotation dudit moteur d'axe (3) ; et
- un circuit de commande (35) pour détecter un état de réponse d'activation dudit moteur d'axe (3) lors du démarrage sur la base d'une tension proportionnelle à la rotation dudit moteur d'axe (3) lorsqu'une période de temps prédéterminée s'est écoulée après que ledit moteur d'axe (3) ait été activé par un signal d'activation (S_{C}) et pour commuter le gain de ladite boucle d'asservissement sur la base du résultat de détection,
caractérisé par
- un convertisseur analogique/numérique (23) dans ledit circuit de commande (35) pour convertir d'analogique en numérique un signal d'information (S_{V}) proportionnel à la rotation dudit moteur d'axe (3) ;
- un circuit de verrouillage (37) pour verrouiller une sortie dudit convertisseur analogique/numérique (23).
- un circuit de temporisation (36) pour compter un signal d'horloge (S_{CK}) sur la base dudit signal d'activation du moteur d'axe (3) et pour fournir un signal de verrouillage (S_{R}) lorsque la valeur de comptage atteint une valeur prédéterminée ; et
- un comparateur (38) pour comparer un signal de sortie dudit circuit de verrouillage (37) avec les données de référence (D_{REF3}) et pour fournir un signal de commande (S_{GAIN}) pour commuter le gain de ladite boucle d'asservissement sur la base de la comparaison fournie par ledit comparateur (38).
